Europäisches Patentamt

(19) European Patent Office (11) Publication number: **0 274 368**
B1
Office européen des brevets

(12) **EUROPEAN PATENT SPECIFICATION**

(45) Date of publication of the patent specification: (51) Int. Cl.⁵: **F03B 3/14**
**05.12.90**

(21) Application number: **87850309.3**

(22) Date of filing: **15.10.87**

(54) A rotary joint.

(30) Priority: **25.11.86 SE 8605041**

(43) Date of publication of application:
**13.07.88 Bulletin 88/28**

(45) Publication of the grant of the patent:
**05.12.90 Bulletin 90/49**

(84) Designated Contracting States:
**AT CH DE ES FR GB IT LI**

(56) References cited:
**CH-A- 170 547**
**CH-A- 394 852**

(73) Proprietor: **Flygt AB, Box 1309, S-171 25 Solna(SE)**

(72) Inventor: **Brandt, Bengt Ake, Högklintvägen 29,
S-171 30 Sundbyberg(SE)**
Inventor: **Englesson, Bertil, Snäckvägen 9,
S-161 36 Bromma(SE)**

(74) Representative: **Larsson, Sten, Flygt AB Box 1309,
S-171 25 Solna(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention concerns a rotary joint to be used for controlling the vane angles of a water turbine or a propeller pump. The description below concerns the alternative a water turbine connected to an electric generator for producing electric energy, but the theories are also valid for a pump connected to an electric motor or any other energy source.

The water turbine comprises a rotating hub provided with a number of vanes and arranged in a tube or the like with flowing water. The rotary energy obtained is transmitted to a generator for electric current.

The rotary energy obtained is of course totally dependant of the amount of flowing water and the potential energy, head, that can be utilized. The amount of water may vary considerably which means that the turbine will operate with different flows at different times. As the turbine is designed to have its maximum efficiency at a certain volume of flow and a certain head, the energy of the water will be more or less well utilized.

By designing the vanes adjustable, which means that the vane angle with relation to the water flow may be varied, there is a possibility to optimize the efficiency within a relatively wide range of water amount.

By known turbine plants, where the turbine via an elongated shaft is connected to a "dry" generator, the adjustment of the vanes has been easy to obtain by help of hydraulic or mechanical transmission means along said shaft.

Lately an entirely new type of turbine/generator has been introduced. The turbine and the generator are here integrated into one unit which may be easily hoisted up from the water tube for service. This type of energy generator is especially suitable for small volumes and relatively low heads.

When such a turbine should be provided with adjustable vanes, there arise specific problems if the advantage with the easy service possibilities should not be spoiled. The monitoring impulses that shall execute adjustments of the vane angles, thus must be transmitted from a non-rotating to a rotating unit in a hostile environment. According to the invention this problem is solved by help of the device stated in the claims.

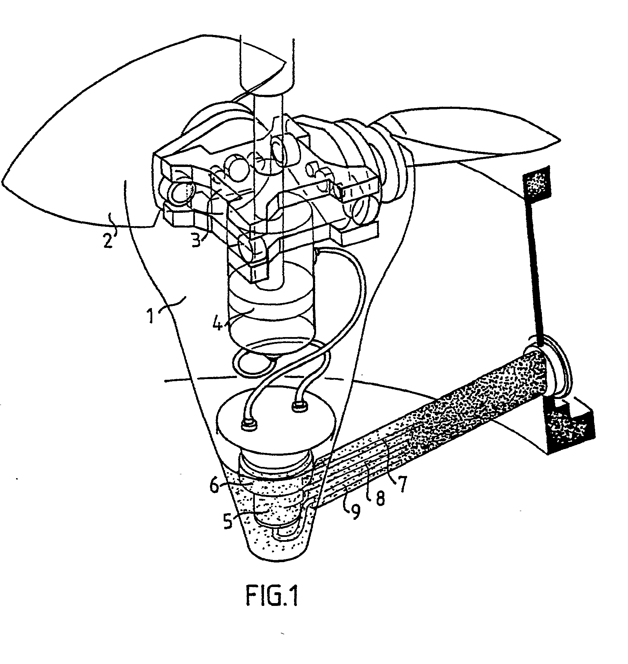

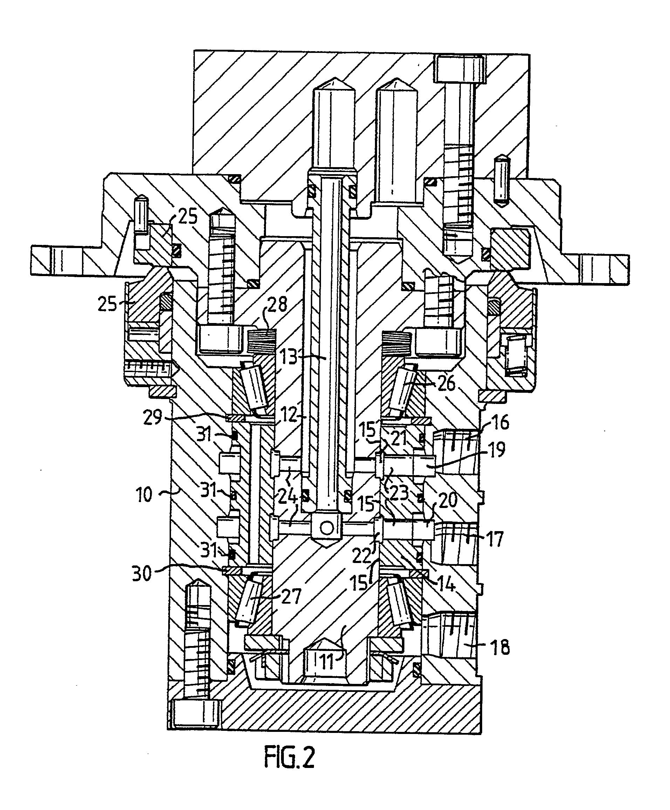

The invention is described more closely below with reference to the enclosed drawings. Fig 1 shows a partly cut view of a part of the hydraulic unit in a submersible energy unit which also includes a generator, while Fig 2 shows a detailed view of a rotary joint according to the invention.

In Fig 1, 1 stands for a hub and 2 for vanes turnably attached to the hub. 3 stands for mechanical transmission means, 4 a hydraulic cylinder, 5, 6 a rotary unit comprising a rotating and a non-rotating part. 7, and 8 finally stand for pressure medium tubes.

In Fig 2, 10 stands for a housing, 11 a shaft with axial channels 12 and 13. 14 stands for a distribution socket, 15 column seals, 16 and 17 inlet/outlet and 18 a drainage connection. 19, 20 stand for outer and 21, 22 inner ring channels, 23 a number of radially directed borings in the socket 14. 25 stands for a mechanical seal, 26 and 27 roller bearings, 28 a spring package, 29 and 30 balancing rings and 31 O-rings.

As mentioned above, the electric and the hydraulic parts are integrated into one unit which may be easily mounted in a preferably vertical tube for the flowing water. This means that great advantages are obtained during building of the power plant as well as at service of the machines.

In order to fully utilize those advantages it is of course important that also the means for obtaining adjustments of the vanes are parts of the integrated unit. The device according to the invention makes this possible in a simple and reliable way.

Pressure medium is brought from a source via the tubes 7, 8 to the non-rotating part 5 of the joint. Said part 5 is connected to the rotary part 6, the transition being sealed by a mechanical seal. This means that the rotary joint is submersible like the rest of the unit.

The pressure medium, hydraulic oil, is according to one alternative, brought to the inlet 16 and is via the distribution socket 14 and the channel 12 in the shaft 11 transmitted to a hydraulic cylinder which in its turn mechanically acts upon the vanes. The pressure medium from the cylinder is returned via the channel 13 and the socket 14 to the inlet 17 (now acting as an outlet). When adjusting the vanes in the opposite direction, the medium is fed in a similar way to the connection 17 and is taken away through the connection 16.

The distribution socket 14 is the central part as this establishes the transition piece between the non-rotating housing 10 and the rotating shaft 11. The socket is thus attached to the housing 10 and forms a number of column seals 15 with the shaft 11. The socket is provided with radial bores 23 preferably arranged in front of the connections 16 and 17 in the housing 10. Ring channels in the socket or the housing create connections between the bores on the outside of the socket, while other ring channels 21, 22 create corresponding connections on the inside of the socket. The shaft 11 has in its turn corresponding bores 24 which connect the channels 12 and 13 with the ring channels 21 and 22 respectively.

If the column seals should work satisfactory it is of course very important that the outer part of the housing 10 is rigidly supported in the rotating part and that surrounding medium is not allowed to penetrate into the seal area. The sealing is obtained by a mechanical seal 25, which stands very high pressures. The support of the socket is taken care of by roller bearings so arranged that the load is directed inclined towards the shaft thus obtaining a centering force.

The play of forces is further complicated because of the fact that the column seals always leak to a certain extent. The drainage is collected in the lower part of the unit and is drained via the connection 18, backwards to the pressure source, not shown. As the latter normally is arranged above the joint, this drainage brings about a high static pressure which is transmitted to the inner ring of the lower bearing. In order to stand this force said inner ring is supported by a shoulder or the like on the shaft 11.

In the upper bearing 26 which is reversed with regard to the lower bearing, the inner ring is not exposed to the same static load. To secure that the inner ring moves together with the outer ring in the movement caused by the static load, one or serveral disc springs 28 are arranged between a shoulder on the shaft and the inner ring. In this way both bearings are correctly loaded. The spring force may be chosen according to the load.

In order to secure that the socket 14 will not be exposed to axial forces which may damage the column seals, supporting rings or the like are arranged between the outer rings of the bearings and the end parts of the socket 14. The supporting rings are rigidly attached to the housing 1, thus preventing the outer rings of the bearings to move towards each other and expose the socket to axial forces.

In order to further secure good conditions for the column seals 15 the socket 14 is sealed in the housing 10 by O-rings which allow a small movement between the socket and the housing.

According to the invention a rotary joint is obtained which in a secure way transmits monitoring impulses from a non-rotating to a rotating part in an under water environment under heavy pressure loads. In the description a turbine unit having a vertical shaft has been referred to. The invention may, however, be used in machines having inclined or horizontal shafts. In these the direction upwards will be defined as the direction towards the turbine or pump.

## Claims

1. A rotary joint for transmission of monotoring impulses from a non-rotating to a rotating part, especially for adjusting the impeller vanes in a submersible turbine or pump, the transmission means being a hydraulic fluid which is transported between a non-rotating outer housing and an inner rotating shaft, where a mechanical seal is arranged between the two parts and where the entire unit is arranged to operate submersed in a fluid, such as water, under a high pressure, the hydraulic fluid being fed and taken away resp through radial connections in the housing and the shaft and the latter being provided with axial channels for transport of the hydraulic fluid to an from a control unit which rotates with the shaft and where a non-rotating distribution socket is arranged between the housing and the shaft, which socket creates a number of column seals with the shaft and is provided with a number of radial bores connected by outer and inner ring channels, characterized in, that the housing (10) is supported by the shaft (11) by roller bearings (26, 27) one at each end of the socket, which bearings are reversed relative each other and so arranged that the load is directed inclined towards the shaft (11), that the roller bearing (27), turned away from the turbine/ pump, with its inner ring is abutting a shoulder or the like on the shaft (11), while the inner ring of the other roller bearing (26) is preloaded by a spring arrangement (28) in the direction of the socket (14) and that the outer rings of the roller bearings (26, 27) are supported in the housing (10), preferably via balancing rings (29, 30), so that the axial load on the bearings is not transmitted to the distribution socket (14).

2. A rotary joint according to clam 1, characterized in that the distribution socket (14) is sealed in the housing by O-rings (31), thus allowing a small possibility for relative movement.

## Patentansprüche

1. Rotationsverbindung zur Übertragung von Überwachungsimpulsen von einem nicht rotierenden zu einem rotierenden Teil, insbesondere zum Verstellen der Flügelradschaufeln bei einer tauchbaren Turbine oder Pumpe, wobei es sich bei dem Übertragungsmittel um ein Hydraulikfluid handelt, das zwischen einem nicht rotierenden Außengehäuse und einer inneren Rotationswelle transportiert wird, wobei eine mechanische Dichtung zwischen den beiden Teilen angeordnet ist und die gesamte Einheit dazu ausgelegt ist, in ein Fluid, wie z.B. Wasser, getaucht unter hohem Druck betrieben zu werden, wobei das Hydraulikfluid durch Radialverbindungen in dem Gehäuse und der Welle zugeführt bzw. abgeleitet wird und die Welle mit axialen Kanälen zum Transport des Hydraulikfluids zu einer sich mit der Welle drehenden Steuereinheit hin und von dieser weg versehen ist, und wobei zwischen dem Gehäuse und der Welle eine nicht rotierende Verteilungshülse vorgesehen ist, die mit der Welle eine Anzahl säulenartiger Dichtungen bildet und mit einer Anzahl von Radialbohrungen versehen ist, die durch äußere und innere Ringkanäle miteinander verbunden sind, dadurch gekennzeichnet, daß das Gehäuse (10) auf der Welle (11) mittels Rollenlagern (26, 27) gelagert ist, von denen sich je eines an jedem Ende der Hülse befindet, wobei die Lager relativ zueinander umgekehrt derart angeordnet sind, daß die Last in schräg verlaufender Weise nach innen in Richtung auf die Welle (11) gerichtet wird, daß das von der Turbine/Pumpe abgelegene Rollenlager (27) mit seinem Innenring an einer Schulter oder dergleichen an der Welle (11) anliegt, während der Innenring des anderen Rollenlagers (26) durch eine Federanordnung (28) in Richtung auf die Hülse (14) vorgespannt ist, und daß die Außenringe der Rollenlager (26, 27) in dem Gehäuse (10) vorzugsweise über Ausgleichsringe (29, 30) gelagert sind, so daß die auf die Lager wirkende Axiallast nicht auf die Verteilungshülse (14) übertragen wird.

2. Rotationsverbindung nach Anspruch 1, dadurch gekennzeichnet, daß die Verteilungshülse (14) in dem Gehäuse durch O-Ringe (31) abgedichtet ist, wodurch eine geringe Möglichkeit für Relativbewegungen gegeben ist.

## Revendications

1. Joint rotatif destiné à transmettre des impulsions de contrôle d'une partie non rotative à une partie rotative, notamment pour le réglage des aubes d'un rotor de pompe ou de turbine submersible, le dispositif de transmission étant un fluide hydraulique qui est transporté entre un boîtier externe non rotatif et un arbre interne rotatif, un joint mécanique étant disposé entre les deux parties et l'ensemble dans sa totalité étant disposé afin qu'il travaille en étant immergé dans un fluide tel que l'eau qui a une pression élevée, le fluide hydraulique étant transmis au boîtier et à l'arbre et étant évacué du boîtier et de l'arbre respectivement par des connexions radiales, l'arbre ayant des canaux axiaux de transport du fluide hydraulique vers un ensemble de commande et à partir d'un tel ensemble qui tourne avec l'arbre, et un manchon non rotatif de distribution est placé entre le boîtier et l'arbre, et le manchon forme un certain nombre de joints d'étanchéité de colonne avec l'arbre et a un certain nombre de trous radiaux connectés par des canaux annulaires externes et internes, caractérisé en ce que le boîtier (10) est supporté par l'arbre (11) par l'intermédiaire de roulements à rouleaux (26, 27), à raison d'un roulement à chaque extrémité du manchon, les roulements ayant des positions inversées mutuellement et étant disposées de manière que la charge soit dirigée en direction inclinée vers l'arbre (11), le roulement à rouleaux (27), tourné du côté opposé à celui de la turbine ou de la pompe, a sa bague interne en butée contre un épaulement ou analogue formé sur l'arbre (11) alors que la bague interne de l'autre roulement à rouleaux (26) est soumise à une force préalable par un ensemble à ressorts (28) agissant vers le manchon (14), et les bagues externes des roulements à rouleaux (26, 27) sont supportées dans le boîtier (10), de préférence par l'intermédiaire de bagues d'équilibrage (29, 30), de manière qu'une force axiale appliquée aux roulements ne soit pas transmise au manchon de distribution (14).

2. Joint rotatif selon la revendication 1, caractérisé en ce que le manchon de distribution (14) coopère de façon étanche avec le boîtier par l'intermédiaire de joints toriques (31), ayant une petite possibilité de déplacement relatif.

EP 0 274 368 B1

FIG.1

EP 0 274 368 B1

FIG.2